# FASCICULE DE BREVET EUROPEEN

(11) **EP 1 914 871 B1**
(45) Date de publication et mention de la délivrance du brevet: **24.02.2010**
(21) Numéro de dépôt: 07117044.3
(22) Date de dépôt: 24.09.2007
(51) Int. Cl.: H02M 3/335

(54) **Système d'alimentation électrique à découpage et variateur de vitesse comportant un tel système**
Schaltnetzteilsystem und Regelantrieb mit einem solchen System
Switched-mode power supply system and variable-speed drive comprising such a system

(30) Priorité: 29.09.2006 FR 0654032
(43) Date de publication de la demande: 23.04.2008
(73) Titulaire: Schneider Toshiba Inverter Europe SAS, 27120 Pacy sur Eure (FR)
(72) Inventeur: Grbovic, Petar, 27200 Vernon (FR)
(74) Mandataire: Dufresne, Thierry

(56) Documents cités:
- EP-A- 1 107 438
- EP-A- 1 508 962
- EP-A- 1 592 119

## Description

La présente invention se rapporte à un système d'alimentation électrique à découpage avec transformateur, en particulier du type flyback converter, délivrant en sortie une ou plusieurs tensions continues à partir d'une tension d'entrée continue. Une telle alimentation à découpage peut être utilisée dans un variateur de vitesse pour alimenter notamment les modules électroniques du variateur. L'invention concerne également un variateur de vitesse possédant une telle alimentation.

Il existe actuellement de nombreuses architectures possibles applicables aux alimentations électriques à découpage. L'architecture utilisée dépend fortement des caractéristiques et des performances exigées pour l'alimentation, telles que la tension d'entrée, la puissance délivrée, les tensions de sortie, les régulations statique et dynamique, la taille, l'efficacité, la fiabilité et le coût global.

Une alimentation à découpage (ou SMPS : Switched Mode Power Supply) peut notamment être utilisée dans un variateur de vitesse de type convertisseur de fréquence destiné à la commande d'un moteur électrique. Une telle alimentation à découpage est alors chargée de fournir une tension continue auxiliaire permettant d'alimenter toute l'électronique du variateur, à partir d'une tension principale de bus continu du variateur, elle-même issue d'un module redresseur du variateur. L'alimentation à découpage peut également servir à alimenter les ventilateurs du variateur et à offrir une tension de sortie extérieure isolée (24 Vcc) disponible pour l'utilisateur en sortie du variateur.

Les tensions de sortie fournies par l'alimentation à découpage sont habituellement de l'ordre 5 à 24 Vcc avec une puissance de sortie, inférieure ou égale à 100 W environ. La régulation de l'alimentation doit maintenir constantes ces tensions de sortie, sans se soucier des variations de la tension d'entrée et de la charge en sortie du variateur. Les variations de charge peuvent en effet aller de 0% (aucune charge) à 100% (charge nominale), alors que les variations de tension d'entrée peuvent aller de 350 Vcc à 1500 Vcc.

En effet, le bus continu du variateur fournit une tension d'entrée très élevée qui peut de plus fortement varier suivant les conditions d'utilisation du variateur. Le dispositif de commutation à semi-conducteurs de l'alimentation à découpage doit donc pouvoir commuter un courant jusqu'à 2A sous 1700 Vcc. Les pertes de conduction et de commutation doivent être aussi basses que possible de façon à autoriser des fréquences de commutation élevées et à diminuer la taille et le coût du radiateur et des composants passifs tels que transformateur, selfs et condensateurs.

Comme stockage d'énergie et comme élément filtrant du bus continu, il est connu de prévoir une capacité tampon de type électrolytique connectée entre les bornes positive A2 et négative A1 du bus. Or, étant donné que la tension continue du bus peut varier généralement entre environ 600Vcc et 800Vcc avec des écarts allant parfois de 350 Vcc jusqu'à 1500Vcc en fonction de la charge aval du variateur, la capacité tampon doit pouvoir supporter une telle tension extrêmement élevée, ce qui génère un coût important. Pour diminuer le coût et réduire l'encombrement, on préfère alors utiliser deux ou plusieurs capacités tampon connectées en série de façon à diminuer la tension supportée par chacune des capacités.

Cependant, chaque capacité électrolytique génère un courant de fuite propre et une impédance série équivalente. L'utilisation de plusieurs capacités tampon peut donc engendrer des différences dans les courants de fuite, ce qui fait que les tensions aux bornes de chaque capacité tampon peuvent différer de manière significative, étant donné que la tension de bus Vbus est globalement constante. S'il y a un déséquilibre entre les courants de fuite, cela entraîne une différence entre les tensions aux bornes des différentes capacités, conduisant à une surtension à travers la capacité ayant le plus faible courant de fuite et donc une rapide diminution du temps de vie de cette capacité.

Pour éviter ce problème et assurer un partage correct de la tension de bus globale Vbus entre les différentes capacités en cas de différence dans les courants de fuite, on rajoute généralement des résistances de partage en parallèle de chaque capacité tampon de façon à équilibrer les tensions aux bornes des différentes capacités. Néanmoins, ces résistances de partage sont encombrantes et chères. De plus, elles génèrent un problème particulier à cause de leur consommation de puissance et de leur température élevée de surface, particulièrement en cas d'utilisation dans un variateur compact.

Les documents EP1107438A2 et EP1592119A2 décrivent un système d'alimentation à découpage comprenant notamment deux condensateurs tampon reliés en série, un transformateur et deux ensembles composés chacun d'un enroulement primaire, d'une diode et d'un commutateur électronique en série. Cependant, un tel système nécessite l'utilisation de diodes, ce qui augmente les pertes de conduction, et nécessite de séparer l'inductance primaire du transformateur en deux enroulements distincts, ce qui complexifie sa réalisation. De plus, il est plus adapté à des condensateurs films qu'à des condensateurs électrolytiques lesquels présentent notamment une dispersion importante de leur résistance interne.

Un des objectifs de la présente invention est de fournir un équilibrage automatique des tensions de capacités tampon et donc d'éliminer le besoin de ces résistances de partage encombrantes et génératrices de pertes de chaleur.

Pour cela, l'invention décrit un système d'alimentation électrique à découpage comportant deux bornes d'entrée, respectivement négative et positive, destinées à recevoir une tension d'alimentation d'entrée continue, un ensemble capacitif tampon connecté entre les bornes d'entrée et comprenant deux capacités tampon reliées en série, un premier commutateur et un second commutateur reliés en série et pilotés respectivement par un premier et un second circuit de commande, un ensemble inductif primaire connecté en série avec les commutateurs, au moins un enroulement secondaire couplé magnétiquement avec l'ensemble inductif primaire pour délivrer une tension de sortie continue. Le système d'alimentation comprend un module d'injection de courant, injectant du courant à un point milieu des deux capacités tampon pour générer un déséquilibre de courant dans ce point milieu, et un circuit d'équilibrage des courants de fuite des capacités tampon dont une première extrémité est connectée au point milieu des deux capacités tampon, pour équilibrer les tensions aux bornes des deux capacités tampon.

Selon une caractéristique, le premier commutateur et le second commutateur sont des transistors de puissance de type MOSFET ou IGBT.

Selon une caractéristique, l'ensemble inductif primaire est connecté en série entre la borne d'entrée positive et les deux commutateurs, la source du premier commutateur étant connectée à la borne d'entrée négative, le drain du premier commutateur étant connecté à la source du second commutateur et le drain du second commutateur étant connecté à l'ensemble inductif primaire.

Selon une autre caractéristique, le point milieu des deux capacités tampon est connecté à la grille du second commutateur.

Selon une autre caractéristique, le circuit d'équilibrage comporte une résistance et une diode reliées en série, l'anode de ladite diode étant dirigée vers le point milieu des deux capacités tampon.

Selon une autre caractéristique, l'ensemble inductif primaire comporte deux enroulements primaires reliés en série et un point milieu des deux enroulements primaires est connecté à une seconde extrémité du circuit d'équilibrage. Alternativement, le système d'alimentation comporte un enroulement d'équilibrage couplé magnétiquement avec l'ensemble inductif primaire, dont une extrémité est reliée à la borne d'entrée positive et dont l'autre extrémité est reliée à une seconde extrémité du circuit d'équilibrage.

Selon une autre caractéristique, le module d'injection de courant est réalisé dans le second circuit de commande. Le second circuit de commande comporte alors une diode Zener de protection dont la cathode est reliée à la grille du second commutateur et l'anode est reliée à la source du second commutateur, une diode de déviation dont la cathode est reliée au point milieu des capacités tampon et l'anode est reliée à la cathode de la diode de protection et un condensateur de charge relié en parallèle de la diode de déviation.

D'autres caractéristiques et avantages vont apparaître dans la description détaillée qui suit en se référant à un mode de réalisation donné à titre d'exemple et représenté par les dessins annexés sur lesquels :
- la figure 1 montre un système d'alimentation intégré dans un variateur de vitesse,
- la figure 2 détaille un exemple d'un système d'alimentation conforme à l'invention,
- la figure 3 représente un mode de réalisation préféré d'un circuit de commande d'un commutateur du système d'alimentation,
- la figure 4 représente un second mode de réalisation de ce circuit de commande,
- la figure 5 donne une variante d'un circuit d'équilibrage du système d'alimentation,
- la figure 6 donne un schéma de principe de raccordement du circuit d'équilibrage.

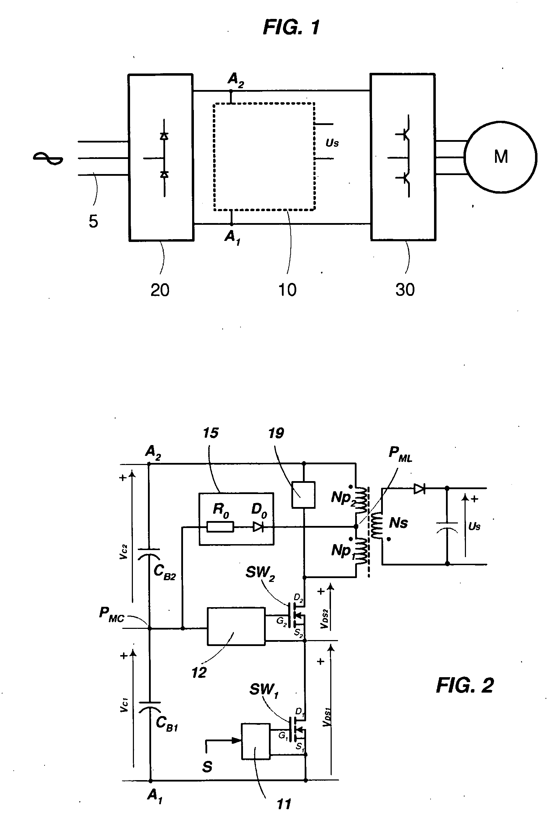

En référence à la figure 1, un variateur de vitesse industriel est alimenté à partir d'un réseau d'alimentation électrique alternatif triphasé 5, situé par exemple dans la gamme de tension de 400V à 690V. Il est basé sur une topologie CA/CC/CA, (CA : Courant Alternatif - CC : Courant Continu). Un tel variateur comporte un module redresseur 20 délivrant une tension de bus continue entre des bornes positive A2 et négative A1, à partir de la tension alternative d'entrée qui peut-être par exemple triphasée ou monophasée. Il comporte ensuite un module onduleur 30 délivrant, à partir de ce bus continu, une tension alternative variable de sortie pour alimenter la charge électrique pilotée par le variateur, telle qu'un moteur M triphasé ou monophasé. La tension de bus sert également à alimenter un système d'alimentation électrique à découpage 10.

La figure 2 détaille un exemple d'architecture du système d'alimentation électrique 10 basé sur une alimentation à découpage CC/CC avec transformateur isolé, du type convertisseur indirect ou flyback converter. L'invention pourrait aussi s'appliquer à une alimentation à découpage CC/CC avec transformateur isolé, du type convertisseur direct ou forward converter.

Le système d'alimentation 10 comporte un ensemble capacitif tampon qui est connecté entre les bornes d'entrée A1 et A2 et qui comprend deux capacités tampon électrolytiques CB1 et CB2 reliées en série. Un point milieu P_{MC} est positionné entre les capacités CB1 et CB2. La première capacité tampon CB1 est reliée entre la borne d'entrée négative A1 et le point milieu P_{MC} des capacités. La seconde capacité tampon CB2 est reliée entre le point milieu P_{MC} et la borne d'entrée positive A2. Préférentiellement, les valeurs des deux capacités tampon CB1, CB2 sont identiques et sont donc dimensionnées pour supporter de l'ordre de la moitié du maximum de la tension de bus Vbus. Un des objectifs de la présente invention est de trouver une solution simple, facile à mettre en oeuvre et peu onéreuse permettant d'équilibrer les tensions aux bornes des deux capacités tampon CB1, CB2, sans devoir utiliser de résistances de partage.

Le système d'alimentation 10 comporte un premier commutateur SW 1 et un second commutateur SW2 reliés en série et pilotés respectivement par un premier circuit de commande 11 et un second circuit de commande 12. Le système d'alimentation comporte également un ensemble inductif primaire relié en série avec les deux commutateurs SW 1 et SW2.

Préférentiellement, les deux commutateurs SW1 et SW2 sont des transistors de puissance de type MOSFET ou IGBT, possédant chacun une grille G dont la commande permet de faire circuler un courant entre un drain D et une source S. La source S1 du premier commutateur SW1 est connectée à la borne d'entrée négative A1. Le drain D1 du premier commutateur SW1 est connecté à la source S2 du second commutateur SW2. Le drain D2 du second commutateur SW2 est connecté à une extrémité de l'ensemble inductif primaire. L'autre extrémité de l'ensemble inductif primaire est connectée à la borne d'entrée positive A2. Ainsi, lorsque les commutateurs SW1 et SW2 sont passants, cela signifie qu'un courant circule dans l'ensemble inductif primaire. Par ailleurs, un circuit limiteur classique 19 (clamping circuit) est ajouté entre la borne positive A2 et le drain D2 du second commutateur SW2, pour protéger celui-ci contre des surtensions au moment de l'ouverture.

La grille G1 et la source S1 du premier commutateur SW1 sont connectées au premier circuit de commande 11. Ce circuit de commande 11 est un circuit classique permettant d'ouvrir (extinction ou switch OFF) et de fermer (allumage ou switch ON) un transistor MOSFET. Il est piloté par un signal de commande externe S qui peut par exemple provenir de l'unité de commande du variateur. La grille G2 et la source S2 du second commutateur SW2 est connectée au second circuit de commande 12. La structure du circuit de commande 12 est détaillée plus loin. Le fait de choisir deux commutateurs SW1 et SW2 en série permet de diviser par deux la tension supportée aux bornes de chacun des commutateurs, et donc de diminuer leur coût et leur encombrement par rapport à l'utilisation d'un seul commutateur supportant l'intégralité de la tension continue de bus.

Dans l'exemple de la figure 2, l'ensemble inductif primaire est composé de deux enroulements primaires NP1,NP2 qui sont directement raccordés en série entre la borne positive A2 et le drain D2 du commutateur SW2. Un point milieu P_{ML} est positionné entre les deux enroulements NP1,NP2. Ce point milieu P_{ML} constitue donc une source de tension fixe VCL dont la valeur dépend du rapport entre les deux enroulements NP1,NP2. Si les enroulements primaires NP1,NP2 ont des valeurs d'inductance identiques, alors la tension au point milieu P_{ML} est égale à la moitié de la tension de bus Vbus.

Par ailleurs, le système d'alimentation comporte un ou plusieurs enroulements secondaires qui sont couplés magnétiquement avec l'ensemble inductif primaire NP1,NP2 dans le but de délivrer une ou plusieurs tensions continues de sortie correspondantes. L'exemple de la figure 2 montre un seul enroulement secondaire N_{S} délivrant une tension de sortie secondaire U_{S} isolée. Ces tensions continues servent à alimenter différents constituants du variateur de vitesse, notamment les circuits électroniques y compris l'unité de commande du variateur. Indifféremment, certaines de ces tensions de sortie peuvent être isolées et d'autres non-isolées de la tension d'alimentation d'entrée du bus continu. L'avantage d'avoir une tension isolée est par exemple de pouvoir disposer d'une tension continue disponible pour l'utilisateur en sortie du variateur.

Selon l'invention, le système d'alimentation comprend un module d'injection de courant, qui sert à injecter un courant additionnel I_{ADD} au point milieu P_{MC} des deux capacités tampon de façon à créer un déséquilibre de courant dans ce point milieu P_{MC}. Ce courant additionnel I_{ADD} va provoquer une augmentation de la tension VC1 aux bornes de la première capacité tampon CB1 au détriment de VC2, de telle sorte que VC1 va être supérieur ou égal à VC2, car VC1 + VC2 = Vbus.

Le système d'alimentation comprend également un circuit d'équilibrage 15 (balancing circuit), destiné à maintenir le déséquilibre des courants de fuite des capacités tampon CB1,CB2 à une valeur prédéterminée. La première extrémité du circuit d'équilibrage 15 est connectée au point milieu P_{MC} des deux capacités tampon. La deuxième extrémité du circuit d'équilibrage 15 est raccordée à une source de tension fixe VCL. Préférentiellement, le circuit d'équilibrage 15 est composé d'une résistance R0 en série avec une diode D0, l'anode de la diode D0 étant dirigée vers le point milieu P_{MC}.

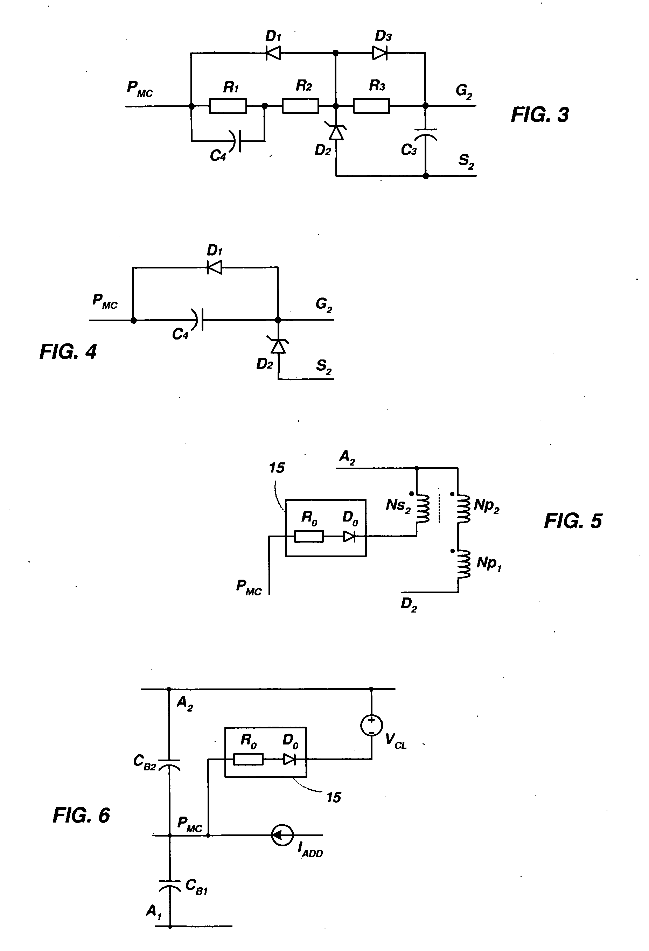

La figure 6 montre un schéma de principe général de raccordement de la source de tension VCL et du circuit d'équilibrage 15 et les figures 2 et 5 montrent deux exemples de réalisation. La source de tension VCL est raccordée entre la borne d'entrée positive A2 et la deuxième extrémité du circuit d'équilibrage 15.

Selon une première variante préférée car de réalisation très simple et indiquée en figure 2, la deuxième extrémité du circuit d'équilibrage 15 est raccordée directement au point milieu P_{ML} des deux enroulements primaires NP1,NP2, lequel constitue alors la source de tension VCL. L'un des enroulement NP2 est donc connecté entre la borne positive A2 et le circuit d'équilibrage 15. Le circuit d'équilibrage 15 va ainsi permettre d'équilibrer la tension VC2 avec la tension VCL, car la diode D0 va conduire du courant tant que la tension VC1 va être supérieure à VCL (ou tant que la tension VC2 sera inférieure à VCL). Un courant va donc circuler dans le circuit d'équilibrage 15 jusqu'à ce que VC1 soit égal à VCL. Si on choisit VCL égal à la moitié de la tension du bus Vbus (c'est-à-dire lorsque les deux enroulements primaires NP1,NP2 sont identiques), alors on maintient ainsi les tensions VC1 et VC2 à la moitié de la tension du bus globale Vbus (car VC1 >= VC2) et on obtient donc l'équilibrage souhaité.

Selon une seconde variante indiquée en figure 5, la source de tension VCL est constituée à l'aide d'un enroulement d'équilibrage secondaire NS2 couplé magnétiquement avec l'ensemble inductif primaire. La deuxième extrémité du circuit d'équilibrage 15 est raccordée à une extrémité de l'enroulement d'équilibrage secondaire NS2, l'autre extrémité de cet enroulement d'équilibrage NS2 étant reliée à la borne d'entrée positive A2. L'inductance de cet enroulement d'équilibrage NS2 spécifique est par exemple déterminée à la moitié de l'inductance primaire pour pouvoir maintenir ainsi la tension VC2 à la moitié de Vbus. Il convient de remarquer que, dans cette seconde variante, l'ensemble inductif primaire peut alors être composé d'un seul ou de deux enroulements primaires puisque le point milieu P_{ML} n'est plus utilisé.

Le module d'injection de courant crée donc volontairement un déséquilibre de tension au point milieu P_{MC} en injectant le courant additionnel I_{ADD} (voir figure 6), ce qui permet ainsi au circuit d'équilibrage 15 de réguler ce déséquilibre autour d'une valeur prédéterminée par la source de tension.

Le module d'injection de courant additionnel I_{ADD} pourrait être réalisé par une source de courant additionnel quelconque. Par exemple, cette source de courant pourrait être créée à l'aide d'une résistance additionnelle connectée en parallèle de la capacité tampon CB2 ou à l'aide d'un circuit convertisseur externe connecté aux bornes A1,A2 et au point P_{MC}. Néanmoins, ces solutions nécessitent l'utilisation d'une résistance de taille importante occasionnant ainsi des pertes thermiques contraignantes.

C'est pourquoi, l'invention propose avantageusement que ce module d'injection de courant soit réalisé dans le second circuit de commande 12, dont deux modes de réalisation sont détaillés dans les figures 3 et 4. Ainsi, le rôle du second circuit de commande 12 est le suivant : synchroniser le second commutateur SW2 avec le premier commutateur SW1 (c'est-à-dire ouvrir SW2 lorsque SW1 est ouvert et fermer SW2 quand SW1 est fermé) et injecter un courant additionnel I_{ADD} au point milieu P_{MC}.

La figure 4 montre un mode de réalisation minimal du second circuit de commande 12 du second commutateur SW2. Dans ce mode de réalisation, le circuit de commande 12 comporte une diode Zener de protection D2 reliée entre la grille G2 et la source S2 du commutateur SW2, l'anode de la diode de protection D2 étant dirigée vers la source S2. Le circuit de commande 12 comporte également une diode de déviation D1 reliée entre la grille G2 du commutateur SW2 et le point milieu P_{MC} des capacités CB1,CB2, l'anode de la diode de déviation D1 étant dirigée vers la grille G2. Le circuit de commande 12 comporte enfin un condensateur de charge C4 en parallèle de la diode de déviation D1. Le fonctionnement d'un tel circuit de commande 12 est le suivant :
- Séquence de fermeture des commutateurs SW1 et SW2. Nous supposons au départ que les deux commutateurs SW 1 et SW2 sont ouverts. La commande des commutateurs est initialisée par un ordre de fermeture du signal S arrivant sur le premier circuit de commande 11. Le premier commutateur SW1 est directement commandé, alors que le second commutateur SW2 est commandé par l'intermédiaire de la tension VDS1 entre la source S1 et le drain D1 du commutateur SW1. Cette tension VDS1 chute lorsque le commutateur SW1 se ferme. Par conséquent, un courant de charge -IC4 circule à travers le condensateur de charge C4 vers la capacité source-grille CSG2 du commutateur SW2. Ainsi, la tension grille-source VGS2 augmente. Au moment où cette tension VGS2 atteint la tension de claquage de la diode Zener D2 (de l'ordre de 10 à 15V par exemple), alors un courant drain-source IDS2 commence à circuler et à décharger les capacités drain-grille et drain-source de SW2. Par conséquent, la tension drain-source VDS2 du commutateur SW2 chute. En raison de l'effet de Miller, la tension VGS2 reste approximativement constante tandis que la tension VDS2 chute. Une fois que la tension VDS2 atteint zéro, la tension VGS2 continue de monter et force le commutateur MOSFET SW2 dans la région linéaire résistive. La tension VGS2 augmente jusqu'à la tension de claquage de la diode. Puis, la tension VGS2 et le courant IC4 atteignent zéro. Peu de temps après, le commutateur SW2 est entièrement alimenté. Le courant polarisé nécessaire à maintenir un état stable est le courant de fuite de la diode de déviation D1, qui traverse la diode Zener D2.
- Séquence d'ouverture des commutateurs SW1 et SW2. Nous supposons maintenant que les deux commutateurs SW1 et SW2 sont fermés. La tension VGS2 est maximale et le condensateur C4 est entièrement chargé. La commande des commutateurs est initialisée par un ordre d'ouverture du signal S arrivant sur le premier circuit de commande 11. Le premier commutateur SW1 est directement commandé, tandis que le commutateur SW2 est commandé par l'intermédiaire de la tension VDS1. Lorsque le commutateur SW1 s'ouvre, la tension VDS1 commence à augmenter. La diode D2 de protection est polarisée à l'envers et le condensateur de charge C4 peut se décharger avec un courant de décharge IC4 circulant vers le point milieu P_{MC}. Ce courant de décharge IC4 est sensiblement l'inverse du courant de charge -IC4 survenu durant la phase de fermeture de SW1,SW2. Une fois que la tension VDS1 a atteint Vbus/2, le condensateur C4 est déchargé et D1 commence à conduire un courant ID1. En effet, pendant une durée assez brève, le commutateur SW1 est ouvert, tandis que le commutateur SW2 n'est pas encore ouvert. Donc pendant cette durée, le courant traversant SW2 est détourné vers les diodes D1 et D2 et le point milieu P_{MC}. En même temps, la capacité CSG2 a été déchargée et la tension VGS2 a chuté. Tant que la tension VGS2 est toujours au-dessus de la tension de Miller, le commutateur SW2 conduit. Au moment où la tension VGS2 a atteint la tension de Miller, le commutateur SW2 commence à s'ouvrir et le courant ID1 retombe alors à zéro.

Le bilan des principaux courants circulant dans le second circuit de commande 12 est le suivant :
- un courant de charge -IC4 du condensateur C4 durant la phase de fermeture,
- un courant inverse IC4 de décharge de C4 durant la phase d'ouverture et
- un courant ID1 circulant vers le point milieu P_{MC} à travers D1 et D2 lorsque SW1 est ouvert et que SW2 est fermé, durant la phase d'ouverture.

Comme les phases d'ouverture et de fermeture de SW1 et SW2 se succèdent rapidement durant le fonctionnement normal du système d'alimentation, la somme de ces courants fournit globalement le courant additionnel I_{ADD} qui circule vers le point milieu P_{MC}.

La figure 3 montre un mode de réalisation préféré du second circuit de commande 12 du second commutateur SW2. Dans ce mode de réalisation, certains composants passifs sont rajoutés par rapport au mode de réalisation de la figure 4, pour une meilleure efficacité du système d'alimentation.

Ce mode de réalisation préféré comprend un filtre composé d'une résistance de filtrage R3 reliée entre la grille G2 du commutateur SW2 et la cathode de la diode de protection D2, et d'un condensateur de filtrage C3 entre l'anode de la diode D2 et la source S2 de SW2. Le but principal de ce filtre est d'assurer un délai d'ouverture du commutateur SW2, donc d'augmenter le temps de circulation du courant ID1 et donc d'assurer un courant I_{ADD} supérieur. La figure 3 montre également une diode d'accélération D3 en parallèle de la résistance R3 avec la cathode dirigée vers la grille G2. La diode D3 shunte la résistance R3 durant la fermeture de SW2 pour accélérer sa commutation. La figure 3 montre enfin deux résistances de polarisation R1 et R2. La résistance R1 est branchée en parallèle de la capacité C4 et la résistance R2 est insérée entre la capacité C4 et la cathode de la diode D2. Le but de R1 est d'améliorer la conduction du commutateur SW2 à l'état fermé. Le but de R2 est d'amortir d'éventuelles oscillations dues à une inductance parasite du second circuit de commande 12.

Le système d'alimentation électrique à découpage décrit dans la présente l'invention est évidemment utilisable dans tout convertisseur de type CC/CC, non limité à un variateur de vitesse.

## Revendications

1. Système d'alimentation électrique à découpage (10) comportant :
- deux bornes d'entrée respectivement négative (A1) et positive (A2), destinées à recevoir une tension d'alimentation d'entrée continue,
- un ensemble capacitif tampon connecté entre les bornes d'entrée et comprenant deux capacités tampon (CB1,CB2) reliées en série,
- un premier commutateur (SW1) et un second commutateur (SW2) de type transistor de puissance MOSFET ou IGBT, pilotés respectivement par un premier et un second circuit de commande (11,12),
- un ensemble inductif primaire (Np1, Np2),
- au moins un enroulement secondaire (Ns) couplé magnétiquement avec l'ensemble inductif primaire (Np1, Np2) pour délivrer une tension de sortie continue (Us),
- un module d'injection de courant injectant du courant à un point milieu (P_{MC}) des deux capacités tampon (CB1,CB2) pour générer un déséquilibre de courant dans ce point milieu (P_{MC}),
**caractérisé en ce que** l'ensemble inductif primaire (Np1, Np2) est connecté en série entre la borne d'entrée positive (A2) et les deux commutateurs (SW1, SW2), la source (S1) du premier commutateur (SW1) étant connectée à la borne d'entrée négative (A1), le drain (D1) du premier commutateur (SW1) étant connecté à la source (S2) du second commutateur (SW2) et le drain (D2) du second commutateur (SW2) étant connecté à l'ensemble inductif primaire,
et **en ce que** le système d'alimentation comprend un circuit d'équilibrage (15) des courants de fuite des capacités tampon dont une première extrémité est connectée au point milieu (P_{MC}) des deux capacités tampon, pour équilibrer les tensions aux bornes des deux capacités tampon.

2. Système d'alimentation électrique selon la revendication 1, **caractérisé en ce que** le point milieu (P_{MC}) des deux capacités tampon est connecté à la grille (G2) du second commutateur (SW2).

3. Système d'alimentation électrique selon la revendication 1 ou 2, **caractérisé en ce que** le circuit d'équilibrage (15) comporte une résistance (R0) et une diode (D0) reliées en série, l'anode de ladite diode étant dirigée vers le point milieu (P_{MC}) des deux capacités tampon.

4. Système d'alimentation électrique selon la revendication 3, **caractérisé en ce que** l'ensemble inductif primaire comporte deux enroulements primaires (Np1, Np2) reliés en série et **en ce qu'**un point milieu (P_{ML}) des deux enroulements primaires est connecté à une seconde extrémité du circuit d'équilibrage (15).

5. Système d'alimentation électrique selon la revendication 3, **caractérisé en ce qu'**il comporte un enroulement d'équilibrage (Ns2) couplé magnétiquement avec l'ensemble inductif primaire (Np1, Np2), dont une extrémité est reliée à la borne d'entrée positive (A2) et dont l'autre extrémité est reliée à une seconde extrémité du circuit d'équilibrage (15).

6. Système d'alimentation électrique selon la revendication 2, **caractérisé en ce que** le second circuit de commande (12) comporte une diode Zener de protection (D2) dont la cathode est reliée à la grille du second commutateur (SW2) et l'anode est reliée à la source du second commutateur (SW2), une diode de déviation (D1) dont la cathode est reliée au point milieu (P_{MC}) des capacités tampon et l'anode est reliée à la cathode de la diode de protection (D2) et un condensateur de charge (C4) relié en parallèle de la diode de déviation (D1).

7. Système d'alimentation électrique selon la revendication 2, **caractérisé en ce que** le second circuit de commande (12) comporte :
- une diode Zener de protection (D2) dont l'anode est reliée à la source du second commutateur (SW2) et dont la cathode est reliée à la grille du second commutateur (SW2) via une résistance de filtrage (R3),
- une diode de déviation (D1) dont la cathode est reliée au point milieu des capacités tampon (P_{MC}) et dont l'anode est reliée à la cathode de la diode de protection (D2),
- une diode d'accélération (D3) en parallèle de la résistance de filtrage (R3) et dont la cathode est dirigée à la grille du second commutateur (SW2),
- un condensateur de filtrage (C3) connecté entre la grille et la source du second commutateur (SW2),
- un condensateur de charge (C4) connecté au point milieu des capacités tampon (P_{MC}) et à la cathode de la diode de protection (D2) via une résistance de polarisation (R2).

8. Système d'alimentation électrique selon la revendication 1, **caractérisé en ce que** le système d'alimentation délivre plusieurs tensions de sorties (Us) dont certaines sont isolées et d'autres non-isolées de la tension d'alimentation d'entrée.

9. Variateur de vitesse comprenant un module redresseur (20) délivrant une tension d'entrée continue et un module onduleur (30) délivrant une tension variable de sortie vers une charge électrique, **caractérisé en ce que** le variateur comporte un système d'alimentation électrique (10) selon l'une des revendications précédentes, alimenté par la tension d'entrée continue.

## Claims

1. Switched-mode power supply system (10) comprising:
- two input terminals, namely a negative input terminal (A1) and a positive input terminal (A2) respectively, which are intended to receive a DC input supply voltage;
- a capacitive buffer assembly connected between the input terminals and comprising two buffer capacitors (CB1, CB2) connected in series;
- a first switch (SW1) and a second switch (SW2) of the MOSFET or IGBT power transistor type, which are driven by a first and a second control circuit (11, 12) respectively;
- a primary inductive assembly (Np1, Np2);
- at least one secondary winding (Ns) magnetically coupled to the primary inductive assembly (Np1, Np2) in order to deliver a DC output voltage (Us); and
- a current injection module, injecting current at a mid-point (P_{MC}) of the two buffer capacitors (CB1, CB2), in order to generate a current imbalance at this mid-point (P_{MC}),
**characterized in that** the primary inductive assembly (Np1, Np2) is connected in series between the positive input terminal (A2) and the two switches (SW1, SW2), the source (S1) of the first switch (SW1) being connected to the negative input terminal (A1), the drain (D1) of the first switch (SW1) being connected to the source (S2) of the second switch (SW2), and the drain (D2) of the second switch (SW2) being connected to the primary inductive assembly and **in that** the power supply system includes a balancing circuit (15) for balancing the leakage currents of the buffer capacitors, a first end of which is connected to the mid-point (P_{MC}) of the two buffer capacitors, in order to balance the voltages across the terminals of the two buffer capacitors.

2. Power supply system according to Claim 1, **characterized in that** the mid-point (P_{MC}) of the two buffer capacitors is connected to the gate (G2) of the second switch (SW2).

3. Power supply system according to Claim 1 or 2, **characterized in that** the balancing circuit (15) comprises a resistor (R₀) and a diode (D₀) connected in series, the anode of said diode being directed towards the mid-point (P_{MC}) of the two buffer capacitors.

4. Power supply system according to Claim 3, **characterized in that** the primary inductive assembly comprises two primary windings (Np1, Np2) connected in series and **in that** a mid-point (P_{ML}) of the two primary windings is connected to a second end of the balancing circuit (15).

5. Power supply system according to Claim 3, **characterized in that** it comprises a balancing winding (Ns2) magnetically coupled to the primary inductive assembly (Np1, Np2), one end of which is connected to the positive input terminal (A2) and the other end of which is connected to a second end of the balancing circuit (15).

6. Power supply system according to Claim 2, **characterized in that** the second control circuit (12) comprises a protection zener diode (D2), the cathode of which is connected to the gate of the second switch (SW2) and the anode of which is connected to the source of the second switch (SW2), a bypass diode (D1), the cathode of which is connected to the mid-point (P_{MC}) of the buffer capacitors and the anode of which is connected to the cathode of the protection diode (D2), and a charging capacitor (C4) connected in parallel with the bypass diode (D1).

7. Power supply system according to Claim 2, **characterized in that** the second control circuit (12) comprises:
- a protection zener diode (D2), the anode of which is connected to the source of the second switch (SW2) and the cathode of which is connected to the gate of the second switch (SW2) via a filtering resistor (R3);
- a bypass diode (D1), the cathode of which is connected to the mid-point (P_{MC}) of the buffer capacitors and the anode of which is connected to the cathode of the protection diode (D2);
- an acceleration diode (D3) in parallel with the filtering resistor (R3), the cathode of which diode is directed to the gate of the second switch (SW2);
- a filtering capacitor (C3) connected between the gate and the source of the second switch (SW2); and
- a charging capacitor (C4) connected to the mid-point (P_{MC}) of the buffer capacitors and to the cathode of the protection diode (D2) via a biasing resistor (R2).

8. Power supply system according to Claim 1, **characterized in that** the system delivers several output voltages (Us), some of which are isolated and others not isolated from the input supply voltage.

9. Speed variator comprising a rectifier module (20) delivering a DC input voltage and an inverter module (30) delivering a variable output voltage to an electrical load, **characterized in that** the variator includes a power supply system (10) according to one of the preceding claims, which is supplied by the DC input voltage

## Patentansprüche

1. Getaktetes Stromversorgungssystem (10), das aufweist:
- zwei Eingangsklemmen, eine negative (A1) bzw. eine positive (A2), die dazu bestimmt sind, eine Eingangs-Versorgungsgleichspannung zu empfangen,
- eine kapazitive Puffereinheit, die zwischen den Eingangsklemmen angeschlossen ist und zwei in Reihe geschaltete Pufferkondensatoren (CB1, CB2) enthält,
- einen ersten Wählschalter (SW1) und einen zweiten Wählschalter (SW2) vom Typ MOSFET- oder IGBT-Leistungstransistor, die von einer ersten bzw. einer zweiten Steuerschaltung (11, 12)gesteuert werden,
- eine induktive Primäreinheit (Np1, Np2)
- mindestens eine Sekundärwicklung (Ns), die magnetisch mit der induktiven Primäreinheit (Np1, Np2) gekoppelt ist, um eine Ausgangsgleichspannung (Us) zu liefern,
- ein Stromeinspeisungsmodul, das Strom an einem Mittelpunkt (P_{MC}) zwischen den zwei Pufferkondensatoren (CB1, CB2) einspeist, um um an diesem Mittelpunkt (P_{MC}) ein Stromungleichgewicht zu erzeugen,
**dadurch gekennzeichnet, dass** die induktive Primäreinheit (Np1, Np2) zwischen der positiven Eingangsklemme (A2) und den zwei Wählschaltern (SW1, SW2) in Reihe geschaltet ist, wobei die Source (S1) des ersten Wählschalters (SW1) mit der negativen Eingangsklemme (A1) verbunden ist, der Drain (D1) des ersten Wählschalters (SW1) mit der Source (S2) des zweiten Wählschalters (SW2) verbunden ist, und der Drain (D2) des zweiten Wählschalters (SW2) mit der induktiven Primäreinheit verbunden ist, und dass das Versorgungssystem eine Ausgleichsschaltung (15) der Leckströme der Pufferkondensatoren enthält, von der ein erstes Ende mit dem Mittelpunkt (P_{MC}) der zwei Pufferkondensatoren verbunden ist, um die Spannungen an den Klemmen der zwei Pufferkondensatoren auszugleichen.

2. Stromversorgungssystem nach Anspruch 1, **dadurch gekennzeichnet, dass** der Mittelpunkt (P_{MC}) der zwei Pufferkondensatoren mit dem Gate (G2) des zweiten Wählschalters (SW2) verbunden ist.

3. Stromversorgungssystem nach Anspruch 1 oder 2, **dadurch gekennzeichnet, dass** die Ausgleichsschaltung (15) einen Widerstand (R0) und eine Diode (D0) aufweist, die in Reihe geschaltet sind, wobei die Anode der Diode zum Mittelpunkt (P_{MC}) der zwei Pufferkondensatoren gerichtet ist.

4. Stromversorgungssystem nach Anspruch 3, **dadurch gekennzeichnet, dass** die induktive Primäreinheit zwei in Reihe geschaltete Primärwicklungen (Np1, Np2) aufweist, und dass ein Mittelpunkt (P_{ML}) zwischen den zwei Primärwicklungen mit einem zweiten Ende der Ausgleichsschaltung (15) verbunden ist.

5. Stromversorgungssystem nach Anspruch 3, **dadurch gekennzeichnet, dass** es eine Ausgleichswicklung (Ns2) aufweist, die magnetisch mit der induktiven Primäreinheit (Np1, Np2) gekoppelt ist, von der ein Ende mit der positiven Eingangsklemme (A2) und das andere Ende mit einem zweiten Ende der Ausgleichsschaltung (15) verbunden ist.

6. Stromversorgungssystem nach Anspruch 2, **dadurch gekennzeichnet, dass** die zweite Steuerschaltung (12) eine Zener-Schutzdiode (D2), deren Kathode mit dem Gate des zweiten Wählschalters (SW2) und deren Anode mit der Source des zweiten Wählschalters (SW2) verbunden ist, eine Umleitungsdiode (D1), deren Kathode mit dem Mittelpunkt (P_{MC}) der Pufferkondensatoren und deren Anode mit der Kathode der Schutzdiode (D2) verbunden ist, und einen Lastkondensator (C4) aufweist, der mit der Umleitungsdiode (D1) parallelgeschaltet ist.

7. Stromversorgungssystem nach Anspruch 2, **dadurch gekennzeichnet, dass** die zweite Steuerschaltung (12) aufweist:
- eine Zener-Schutzdiode (D2), deren Anode mit der Source des zweiten Wählschalters (SW2) und deren Kathode mit dem Gate des zweiten Wählschalters (SW2) über einen Filterwiderstand (R3) verbunden ist,
- eine Umleitungsdiode (D1), deren Kathode mit dem Mittelpunkt (P_{MC}) der Pufferkondensatoren und deren Anode mit der Kathode der Schutzdiode (D2) verbunden ist,
- eine Beschleunigungsdiode (D3) parallel zum Filterwiderstand (R3) und deren Kathode zum Gate des zweiten Wählschalters (SW2) gerichtet ist,
- einen Filterkondensator (C3), der zwischen dem Gate und der Source des zweiten Wählschalters (SW2) angeschlossen ist,
- einen Lastkondensator (C4), der mit dem Mittelpunkt (P_{MC}) der Pufferkondensatoren und mit der Kathode der Schutzdiode (D2) über einen Polarisationswiderstand (R2) verbunden ist.

8. Stromversorgungssystem nach Anspruch 1, **dadurch gekennzeichnet, dass** das Versorgungssystem mehrere Ausgangspannungen (Us) liefert, von denen manche von der Eingangsversorgungsspannung isoliert und andere nicht isoliert sind.

9. Drehzahlregler, der ein Gleichrichtermodul (20), das eine Eingangsgleichspannung liefert, und ein Wechselrichtermodul (30) enthält, das eine variable Ausgangsspannung an eine elektrische Last liefert, **dadurch gekennzeichnet, dass** der Regler ein Stromversorgungssystem (10) nach einem der vorhergehenden Ansprüche aufweist, das mit der Eingangsgleichspannung versorgt wird.
